Europäisches Patentamt

European Patent Office

Office européen des brevets

(19)

(11) Publication number: **0 041 933**
**B1**

(12) **EUROPEAN PATENT SPECIFICATION**

(45) Date of publication of patent specification: **28.03.84**

(51) Int. Cl.³: **C 05 F 9/04**

(21) Application number: **81850101.7**

(22) Date of filing: **04.06.81**

(54) **A method of bringing gases into contact with compostible material or partially composted material, and an arrangement for carrying out the method.**

(30) Priority: **06.06.80 SE 8004265**

(43) Date of publication of application:
**16.12.81 Bulletin 81/50**

(45) Publication of the grant of the patent:
**28.03.84 Bulletin 84/13**

(84) Designated Contracting States:
**AT BE CH DE GB IT LI NL**

(56) References cited:
**DE - A - 821 947**
**GB - A - 496 547**
**GB - A - 521 894**
**GB - A - 521 895**

(73) Proprietor: **ARMERAD BETONG VÄGFÖRBÄTTRINGAR AB**
**Segelbätsvägen 9**
**S-112 88 Stockholm (SE)**

(72) Inventor: **Nordlund, Tore**
**Violgatan 1**
**S-644 00 Torshälla (SE)**

(74) Representative: **Lindeström, Lennart et al,**
**STENHAGEN PATENTBYRA AB Karlavägen 18**
**S-114 31 Stockholm (SE)**

Courier Press, Leamington Spa, England.

## A method of bringing gases into contact with compostible material or partially composted material and an arrangement for carrying out the method

The present invention relates to a method of bringing gases into contact with compostible material or partially composted material, and an arrangement for carrying out the method.

More specifically, the present invention relates to a method of bringing gases into contact with compostible or partially composted material in which said material has the form of a mass resting on a layer of particulate material and is through-passed by gas, preferably air, introduced into said mass through gas-distributing means embedded in or covered by said layer of particulate material, and in which the layer comprises a first part-layer of relatively coarse particulate material intended to protect the gas-distributing means and to serve as a distribution filter for the through-flowing gas, and a second part-layer located on said first part-layer and comprising relatively fine particulate material, said further part-layer being intended to distribute said through-flowing gas prior to said gas being introduced into the compostible for partial composted material.

The purpose of bringing gas, preferably air, into contact with compostible material or partially composted material is either to compost said material or to subject partially composted material to a subsequent composting effect, or to purify contaminated air, e.g. air containing obnoxious gases, with the aid of a filter comprising partially composted material (bio-filter).

By "compostible material" is meant preferably a mixture of waste material such as domestic waste, bark, sawdust, woodchips or the like, or organic material having a certain fuel value such as peat or similar fossil material, and a material containing microorganisms, such as sludge obtained from sewage purification plants.

A method according to the aforegoing constitutes part of the present state of the art (see published Swedish patent application No. 7809701-1). One disadvantage with the known method is that it is difficult to remove the composted material, for example by means of wheel-mounted loaders, from the layer of particulate non-composted material without part of said non-composted material accompanying said composted material and contaminating the same. As a result of the action of the overlying material undergoing treatment, the function of the other part-layer to provide uniform distribution of the air coming from beneath can be impaired. A further serious disadvantage is that a layer of material undergoing treatment in accordance with present day methods cannot, without disadvantage, be subjected to the weight of a working tool or vehicle. As will be understood, an important advantage is to be gained from a handling aspect if such tools and vehicles are able to operate over a wider area, which also includes the under-layers of composted material.

It has now been found that the aforementioned disadvantages can be eliminated or substantially reduced when the second part-layer is formed of a mixture of said relatively fine particulate material and a binding agent, whereat the fine particulate material serves as ballast in the concrete formed. It is essential that the amount of binder added is so adjusted and the particle size of the particulate material so distributed that the part-layer has an open porous structure, so as to be gas permeable and permit the passage of leaching water and/or drained water therethrough.

The present invention is concerned with a method of bringing gases into contact with compostible or partially composted material, in which the material is placed in the form of a mass on a layer of particulate material and through-passed by the gas, preferably air, introduced into the mass through gas-distributing means embedded in or covered by the layer of particulate material and in which the layer comprises a first part-layer of relatively coarse particulate material intended to protect the gas-distributing means and to act as a distributing filter for the through-flowing gas, and a second part-layer located upon the first part-layer and comprising relatively fine particulate material, said second part-layer being intended to distribute the through-flowing gas before it is introduced into the compostible or partially composted material. The invention is characterized by the feature of using as a layer one in which the second part-layer represents a mixture of the relatively fine particulate material as a ballast material and a binder therefore, said fine particulate material presenting such a size distribution and the mixing ratio between the latter and said binder being such as to render the second part-layer stiff and impart an open pore structure thereto, to render it gas-permeable and water-permeable, the gas flow resistance in the second part-layer, seen in a direction at right angles to the main surface of the part-layer, being higher than the gas flow resistance in the first part-layer.

To one of normal skill in this art having knowledge of the aforegoing it should be a relatively simple matter, possibly after making suitable experiments, to establish suitable proportions between the ballast material and the binding agent and a suitable particle size distribution of the ballast material selected in each particular case. By combining relatively coarse particulate material, for example gravel, in the first part-layer, and a concrete according to the above in the second part-layer, it is possible to obtain a foundation capable of withstanding the very heavy loads created by handling equipment and vehicles, and which at the same time fulfils requirements with regard to its ability to allow gas and liquid to pass therethrough.

The coarse particulate material used to form the first part-layer, i.e. the part-layer which is in contact with the gas-distributing means, may principally comprise any inexpensive material whatsoever, such as gravel, crushed slag, crushed light-weight concrete, macadam etc. The thickness of the part-layer should be such as to provide satisfactory support and satisfactory protection. The second part-layer of concrete has a greater flow resistance than the first part-layer. Thus, the gas introduced will spread over the whole area of the layer.

The composite layer used according to the invention enables gas, preferably air, to be supplied to the mass of compostible or partially composted material in a more uniform manner. In this way, the risk of ill-smelling gases entering the surrounding atmosphere is reduced. Consequently, the compostation of organic material basic to the composting process is very complete and, furthermore, takes place more quickly.

By using a mixture of fine particulate material and binding agent as material for the second part-layer, further improved draining of the material being composted is achieved. Because the layer becomes completely rigid or stiff, the concrete retains its open porous structure, so that water is able to pass freely to the gas-distributng means through which the water can run to collecting drains. To this end, the gas-distributing means may be inclined to the horizontal in a known manner, thereby further facilitating the drainage of water.

The invention also relates to an arrangement for carrying out the method. The arrangement is of the kind which comprises a layer of particulate material and gas-distributing means for introducing gas into a mass of compostible or partially composted material resting on said layer, said layer comprising a first part-layer of relatively coarse particulate material intended to serve as protection for the gas-distributing means and as a distribution filter for the gas introduced into said mass and flowing therethrough, and a second part-layer arranged on top of the first layer and comprising relatively fine particulate material. The arrangement is characterized in that the second part-layer represents a mixture of the relatively fine particulate material, as a ballast material, and binding agent, said fine particulate material presenting such a size distribution and the mixing ratio between the latter and said binder being such as to render the second part-layer stiff and impart an open pore structure thereto, and to render it gas-permeable and water-permeable with a gas flow resistance in the second part-layer, seen in a direction at right angles to the main surface of the part-layer higher than the gas flow resistance in the first part-layer.

According to one embodiment of the arrangement according to the invention, the gas-distributing means have the form of perforated pipes which rest on the ground and which are inclined slightly towards a drainage means for leading drainage water and/or leaching water away from the mass of compostible or partial composted material. The drainage means may suitably comprise a collector line for distributing air to the perforated pipes.

In accordance with a further embodiment of the invention, the drainage means extending from the pipe or pipes serving a gas-distributing means, may be connected, via a respective further pipe, to a source of gas, preferably air, for example a powerful fan or blower, and to a drain collecting drainage and/or leaching water. In this respect, a pipe leading to the drain may have a portion arranged to serve as a liquid trap or seal.

The second part-layer suitably comprises asphalt concrete. Other material may be used, however, particularly lightweight ballast concrete, which comprises particles of expanded clay bound together with cement or a plastics substance.

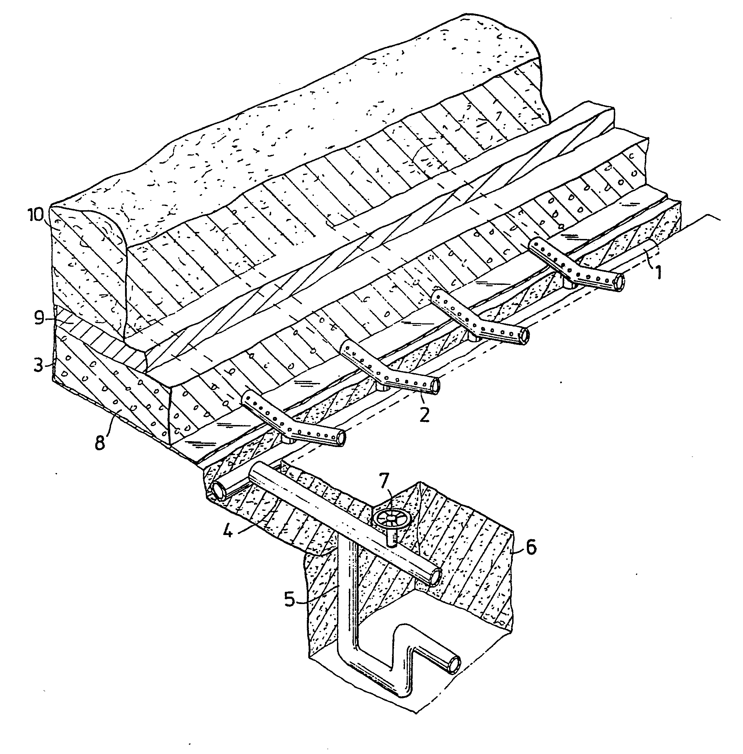

The invention will now be described in more detail with reference to the accompanying drawing, in which the only figure is a perspective view of an arrangement for the final composting of partially composted material (waste and sludge).

With reference to the figure, the first step taken when practising the present invention is to first excavate and terrace a suitable piece of ground, to form a suitable pit having a relatively long extension in the plane of the ground. The pit is then divided into sections, and in each section there is arranged a main pipe 1 in a chute at the bottom of said section. The drawing illustrates one such section. Extending from each main pipe is a plurality of perforated branch pipes 2, which are included slightly towards the location at which they are connected to the main pipe. The walls of the pit are then covered with a layer 3 of dense material, e.g. thermoplastic foil. The main pipe 1 is connected, via a pipe 4 buried in the ground, to a source of air supply (fan or some other form of blowing device), and to a branch pipe 5 which leads to a drain 6 provided with a water trap. The water trap has been produced by bending an end part of the pipe 5 into a U-shape. That part of the buried pipe which extends to the fan has a valve 7 for controlling the supply of air to the main pipe 1 and the branch pipes 2. During those periods when air is supplied for composting purposes, the water trap acts as a pressure regulator.

The arrangement of perforated pipes in the bottom of the pit is covered with a first layer 8 of relatively coarse particulate material, said layer being intended to protect the air-distributing means and to serve as a distributing filter for the air supplied through the pipe arrangement. The coarse particulate material comprises macadam which, which respect to particle size distribution, has been given such properties that the filter layer 8 is able to withstand the weight of machines and vehicles located on a second part-layer 9 of relatively fine particulate material which is bound with asphalt to form asphalt concrete.

Ballast material in the asphalt concrete has such particle size distribution and the concrete such composition that the second part-layer 9 has an open porous structure and permits air blown by the fan to pass through the underground system of pipes and the perforated gas-distributing pipes 2. In this respect, the counterpressure in the second layer 9 shall be such that uniform distribution of air is obtained over the whole of the surface of the mass 10 of compostible material lying against the foundation surface, and that the counter pressure in said mass is negligible in relation to the counterpressure in the second part-layer. The second part-layer is of such strength as to enable heavy vehicles and machines to move on said surface without causing damage thereto.

Example

The first part-layer comprised so-called gravel in the form of a fraction which included particle sizes between 8 and 16 mm, the thickness or height of the layer being about 30 cm.

The second part-layer was a mixture of

(1) 15 per cent of a relatively coarse macadam having particle sizes between 16 and 25 mm,
(2) 42 per cent of sand having particle sizes between 0 and 2 mm and
(3) 43 per cent of a limestone filler having particle sizes beneath about 0.25 mm.

An aqueous asphalt emulsion containing about 30% asphalt with a softening temperature of between 46 and 49°C was added to the resultant mixture in an amount such that the binding agent content of said mixture (calculated on the dry weight of said mixture) was 4.0%.

Subsequent to spreading the mixture over a surface to form a layer having a thickness of 15—20 cm and permitting the mixture to solidify, the resistance of the layer to gas passing therethrough was about 400 mm water column (3922 Pa)—a value which is very suitable for distributing gas forced through the layer with the aid of a fan, uniformly over a wide surface covered with compostible material.

In practice this surface may cover 250—300 m². The layer was able to withstand the load of conventional working equipment for transporting and turning the composting material. The material was also so porous that water which had collected on the surface, e.g. rain water, could readily drain through said material.

Two further batches of material containing 4.5 and 5.0% binder, respectively, were also produced. The latter batches of material comprised asphalt similar to that above. An extremely good result was also obtained in this case.

Claims

1. A method of bringing gases into contact with compostible or partially composted material, in which the material is placed in the form of a mass (10) on a layer of particulate material and through-passed by the gas, preferably air, introduced into the mass through gas-distributing means (2) embedded in or covered by the layer of particulate material and in which the layer comprises a first part-layer (8) of relatively coarse particulate material intended to protect the gas-distributing means (2) and to act as a distributing filter for the through-flowing gas, and a second part-layer (9) located upon the first part-layer (8) and comprising relatively fine particulate material, said second part-layer (9) being intended to distribute the through-flowing gas before it is introduced into the compostible or partially composted material, characterized by using as a layer one in which the second part-layer (9) represents a mixture of the relatively fine particulate material as a ballast material and a binder therefor, said fine particulate material presenting such a size distribution and the mixing ratio between the latter and said binder being such as to render the second part-layer (9) stiff and impart an open pore structure thereto, to render it gas-permeable and water-permeable, the gas flow resistance in the second part-layer (9), seen in a direction at right angles to the main surface of the layer, being higher than the gas flow resistance in the first part-layer (8).

2. A method according to claim 1, wherein the gas is introduced through pipes (2) which rest on a foundation surface and are inclined towards an outlet (1) for discharging drainage and/or leaching water from the mass (10) of compostible or partially composted material.

3. An arrangement for carrying out the method according to claim 1 or 2, which comprises a layer of particulate material and gas-distributing means (2) for introducing gas into a mass (10) of compostible or partially composted material resting on the layer, said layer comprising a first part-layer (8) of relatively coarse particulate material intended to protect the gas-distributing means (2) and to act as a distributing filter for the gas introduced to and flowing through the mass, and a second part-layer (9) arranged upon the first part-layer (8) and comprising relatively fine particulate material, characterized in that the second part-layer represents a mixture of the relatively fine particulate material as a ballast material and a binder therefor, said fine particulate material presenting such a size distribution and the mixing ratio between the latter and said binder being such as to render the second part-layer (9) stiff and impart and open pore structure thereto, and to render it gas-permeable and water-permeable with a gas flow resistance in the second part-layer (9), seen in a direction at right angles to the main surface of the part-layer, higher than the gas flow resistance in the first part-layer (8).

4. An arrangement according to claim 3, wherein the gas-distributing means (2) comprises perforated pipes which rest on a foundation surface and are inclined towards an outlet for discharging drainage and/or leaching water from the mass of compostible or composted material.

5. An arrangement according to claim 3 or 4, wherein the perforated pipes (2) are inclined towards the location at which they are connected to a main pipe (1) which is connected via a further pipe (4) to a source of gas, a branch pipe (5) on pipe (4) leading to a drain (6) for collecting drainage and/or leaching water and being provided with a section which serves as a liquid trap.

6. An arrangement according to claims 3—5, wherein said second part-layer (9) comprises asphalt concrete.

7. An arrangement according to claims 3—5, wherein the second part-layer (9) comprises lightweight ballast concrete.

## Patentansprüche

1. Verfahren zum Inberührungbringen von Gasen mit kompostierbarer oder halbkompostierter Materie, bei dem die Materie in Form einer Masse (10) auf eine Schicht eines teilchenförmigen Materials gebracht und vom Gas, bevorzugt Luft, durchströmt wird, wobei das Gas in die Masse mittels Gasvertielorganen (2) eingeleitet wird, die in der Schicht aus teilchenförmigem Material eingebettet oder von ihr bedeckt sind, und bei dem die Schicht aus einer ersten Teilschicht (8) aus relativ groben Teilchen, die zum Schutz der Gasverteilorgane und als Verteilfilter für das hindurchströmende Gas bestimmt ist, und einer zweiten Teilschicht (9) besteht, die über der ersten Teilschicht (8) liegt, aus relativ feinen Telchen besteht und dazu bestimmte ist, das hindruchströmende Gas zu verteilen, bevor es in die kompostierbare bzw. halbkompostierte Materie eintritt, dadurch gekennzeichnet, dass als Schicht eine solche verwendet wird, bei der die zweite Teilshicht (9) eine Mischung aus dem relativ feinteiligen Material als Ballaststoff und einem Bindemittel darstellt, wobei das feinteilige Material eine solche Grössenverteilung besitzt und ein solches Mischungsverhältnis von Teilchen und Bindemittel vorliegt, dass sich eine starre zweite Teilschicht mit offenporiger Struktur ergibt, die gas- und wasserdurchlässig ist, wobei der Strömungswiderstand des Gases in der zweiten Teilschicht (9), rechtwinklig zur Haptebene der Schicht betrachtet, höher ist als der Strömungswiderstand des Gases in der ersten Teilschicht (8).

2. Verfahren nach Anspruch 1, dadurch gekennzeichnet, dass das Gas durch Rohre (2) eingeleitet wird, die auf der Oberfläche eines Fundaments ruhen und gegen einen Auslass (1) zum Abziehen von Ablauf- oder Sickerwasser aus der Masse (10) der kompostierbaren oder halbkompostierten Materie geneigt sind.

3. Vorrichtung zur Ausführung des Verfahrens gemäss Anspruch 1 oder 2, mit einer Schicht eines teilchenförmigen Materials und Gasverteilorganen (2) zur Einleitung von Gas in die Masse (10) einer auf der Schicht liegenden kompostierbaren bzw. halbkompostierten Materie, wobei die Schicht eine erste Teilschicht (8) aus relativ groben Teilchen zum Schutz der Gasverteilorgane (2) und als Verteilfilter für das in die Masse eingeleitete und sie durchströmende Gas und eine zweite Teilschicht (9) aufweist, die auf der ersten Teilschicht (8) angeordnet ist und aus relativ feinteiligem Material besteht, dadurch gekennzeichnet, dass die zweite Teilschicht ein Gemisch aus dem relativ feinteiligen Material als Ballast und einem Bindemittel besteht, wobei das feinteilige Material eine solche Grössenverteilung besitzt und ein solches Mischverhältnis von letzterem zur Bindemittel vorliegt, dass die zweite Teilschicht (9) starr ist, eine offenporige Struktur erhält und gas- und wasserdurchlässig ist, mit einem höheren Gasströmungswiderstand in der zweiten Teilschicht (9), betrachtet senkrecht zur Hauptebene der Teilschicht, als derjenige der ersten Teilschicht (8).

4. Vorrichtung nach Anspruch 3, dadurch gekennzeichnet, dass die Gasverteilorgane (2) aus gelochten Rohren bestehen, die auf einer Fundamentfläche ruhen und gegen einen Auslass zum Abziehen von Drainage- und/oder Sickerwasser aus der Masse der kompostierbaren oder kompostierten Materie geneigt sind.

5. Vorrichtung nach Anspruch 3 oder 4, dadurch gekennzeichnet, dass die gelochten Rohre (2) gegen die Stelle geneigt sind, wo sie mit einem Hauptrohr (1) verbunden sind, welches wiederum über ein weiteres Rohr (4) mit einer Gasquelle verbunden ist, wobei ein Abzweigrohr (5) auf dem Rohr (4) zu einer Drainagestelle (6) zum Sammeln von Drainage- und/oder Sickerwasser führt und mit einem Abschnitt versehen ist, der als Flüssigkeitsfalle dient.

6. Vorrichtung nach den Ansprüchen 3 bis 5, dadurch gekennzeichnet, dass die genannte zweite Teilschicht (9) aus Asphaltmörtel besteht.

7. Vorrichtung nach den Ansprüchen 3 bis 5, dadurch gekennzeichnet, dass die zweite Teilschicht (9) aus Betonmörtel mit leichtem Ballastbesteht.

## Revendications

1. Méthode pour mettre des gaz en contact avec une matière compostable ou une matière partiellement compostée, méthode dans laquelle la matière est placée sous la forme d'une masse (10) sur une couche de matériau particulaire et traversée par le gaz, de préférence de l'air, introduit dans la masse par des organes de distribution de gaz (2) noyés dans ou couverts par la couche de matériau particulaire, et dans laquelle la couche comprend un première couche partielle (8) d'un matériau particulaire relativement grossier destiné à protéger les organes de distribution de gaz (2) et à agir comme un filtre de distribution du gaz traversant cette couche, et une seconde couche partielle (9) placée sur la première couche partielle (8) et comprenant un matériau particulaire relativement fin, la dite seconde couche partielle (9) étant destinée à distribuer le gaz passant par cette couche avant d'être introduit dans la matière compostable ou partiellement compostée, caractérisée en ce qu'on utilise une couche dont la seconde couche partielle (9) est un mélange du matériau particulaire relativement fin, comme charge, et d'un liant, le dit matériau particulaire présentant une telle granulométrie et le rapport de mélange entre ce dernier et le liant étant tel que la seconde couche partielle (9) est rendu rigide et obtient une structure à pores ouverts pour la rendre perméable aux gaz et à l'eau, la résistance au flux gazeux dans la seconde couche partielle (9), considérée dans une direction perpendiculaire à la face principale de la couche, étant plus élevée que la résistance dans la première couche partielle.

2. Méthode selon la revendication 1, caractérisée en ce que le gaz est introduit par des tuyaux (2) reposant sur la surface d'une fondation et étant inclinés vers une sortie (1) pour décharger l'eau de drainage et/ou d'infiltration provenant de la masse (10) de matière compostable ou partiellement compostée.

3. Agencement pour mettre en oeuvre la méthode selon la revendication 1 ou 2, comprenant une couche de matériau particulaire et des organes de distribution de gaz (2) pour introduire un gaz dans une masse (10) de matière compostable ou partiellement compostée reposant sur la couche, la dite couche comprenant une première couche partielle (8) d'un matériau particulaire relativement gros destinée à protéger les organes de distribution de gaz (2) et à agir comme filtre de distribution du gaz introduit dans la masse et la traversant, et une seconde couche partielle (9) arrangée au-dessus de la première couche partielle (8) et comprenant un matériau particulaire relativement fin, caractérisé en ce que la seconde couche partielle représente un mélange du matériau particulaire relativement fin, comme charge, avec un liant, le dit matériau particulaire fin présentant une telle granulométrie et le rapport de mélange entre ce dernier et le liant étant tel que la seconde couche partielle (9) est rendue rigide et qu'elle a une structure à pores ouverts et est perméable aux gaz et à l'eau, la résistance au flux gazeux dans la seconde couche partielle (9), considérée dans une direction perpendiculaire à la surface principale de la couche partielle, étant plus élevée que celle de la première couche partielle (8).

4. Agencement selon la revendication 3, caractérisé en ce que les organes de distribution de gaz (2) sont des tuyaux perforés réposant sur une surface de fondation et étant inclinés vers une sortie pour décharger l'eau de drainage et/ou d'infiltration provenant de la masse de matière compostable ou compostée.

5. Agencement selon la revendication 3 ou 4, caractérisé en ce que les tuyaux perforés (2) sont inclinés vers l'endroit où il sont reliés à un tuyau principal (1) qui est connecté via un autre tuyau (4) à une source de gaz, un tuyau de dérivation (5) sur le tuyau (4) allant à un écoulement (6) collecteur de l'eau de drainage et/où d'infiltration et étant pourvu d'un secteur servant de trappe de liquide.

6. Agencement selon les revendications 3 à 5, caractérisé en ce que la seconde couche partielle (9) comprend un mortier d'asphalte.

7. Agencement selon les revendications 3 à 5, caractérisé en ce que la seconde couche partielle (9) comprend un mortier à charge légère.